# EUROPEAN PATENT APPLICATION

(11) **EP 3 043 303 A1**
(43) Date of publication of application: **13.07.2016**
(21) Application number: 16150479.0
(22) Date of filing: 07.01.2016
(51) Int. Cl.: G06Q 10/10, G06Q 30/06

(54) **CONTROL DEVICE, CONTROL METHOD OF A CONTROL DEVICE, AND A CONTROL SYSTEM**

(30) Priority: 09.01.2015 JP 2015003096
(71) Applicant: Seiko Epson Corporation, Tokyo 163-0811 (JP)
(72) Inventor: ITO, Masahiro, Nagano, 392-8502 (JP); NISHIZAWA, Koji, Nagano, 392-8502 (JP); MORI, Keigo, Nagano, 392-8502 (JP); SUGIYAMA, Yuichi, Nagano, 392-8502 (JP); HIRAI, Shigeru, Nagano, 392-8502 (JP)
(74) Representative: MERH-IP Matias Erny Reichl Hoffmann Patentanwälte PartG mbB

(57) **Abstract**

The control server storage unit 42 of a control server 15 relationally stores transaction information and recording device identification information identifying a recording device 12, and relationally stores a store ID identifying a store, the serial number of a recording device 12 in the store, and sale counter attribute identifying an attribute of a checkout counter in the store. In response to a request from a management device 17, the control server control unit 40 of the control server 15 returns sales-related information based on transaction information related to the store ID, transaction information related to a serial number, or transaction information related to a combination of store ID and sale counter attribute.

## Description

### BACKGROUND

### 1. Technical Field

The present disclosure relates to a control device, a control method of a control device, and a control system.

### 2. Related Art

Control devices (sales management servers) that receive sales information from devices (POS terminals) in stores, store the received sales information, and execute processes based on the stored sales information are known from the literature. See, for example, JP-A-2014-160400.

There is a need for devices that receive sales information and other transaction information from devices used in a business as described above to use characteristics of the received transaction information to provide useful information.

### SUMMARY

The present disclosure provides control servers and control methods for deriving useful information by analyzing transaction information and using characteristics of the transaction information.

According to an aspect of the disclosure, a control device (e.g. control server) includes: a storage unit configured to relationally store transaction information (e.g. print data, such as print data including receipt information)received from a recording device configured to produce receipts (e.g. a printer, such as a printer of a store), and recording device identification information identifying the recording device, and to relationally store store identification information identifying a store, the recording device identification information of one or more recording devices in the store, and a sale counter attribute identifying an attribute of a sale counter where a recording device (e.g. printer) is located in the store. The transaction information may be received in real time. The control device may further include a communication unit configured to communicate with the recording device and to receive the transaction information from the recording device, e.g. via a network. The recording device may have a capability of sending the transaction information to the control device. The control device further includes a control unit configured to return, in response to a request from an external device, sales-related information based on transaction information related to the store identification information, transaction information related to the recording device identification information, or transaction information related to a combination of the store identification information and the sale counter attribute.

Thus comprised, the control device (e.g. control server) has the significant advantage that it can gather transaction information, such as print data, directly from recording devices (e.g. printers), and provide valuable information by analyzing and using features of said transaction information. Since the control device is capable of directly accessing the transaction data gathered from the recording devices (i.e. POS agnostic data), gathering may be performed in real time, thus enabling up to date analysis of the transaction information.

Additionally, said providing of information in response to respective requests on the basis of transaction information is independent of the involved POS systems at respective stores, and may thus use a common language (e.g. data format) for responding to all such requests, independently of a particular POS system or particular POS systems at which the recording devices are installed. Inparticular, the control device enables providing said information through an interface that involves a common, platform-independent web API. Thereby, information concerning any given recording device and/or any given POS system comprising recording devices can be requested from any terminal capable of accessing the web without need to particularly adapt the terminal beforehand for such task.

Moreover, by storing information in the form of the gathered transaction information received from the recording devices (instead of storing information gathered from POS systems), and by moreover storing said gathered transaction information relationally to identification information identifying respective recording devices, the available information is stored in a particularly advantageous and accessible manner, so that the control device can readily identify relevant information in accordance with a request from an external device in a particularly simple and efficient manner. Thus, the control device has the further advantage that it enables conservation of storage capacity and reduction of computational load. Notably, the control device for the first time in the relevant field of technology enables to request transaction information in relation to one or more recording devices that may be of particular interest to a requester.

In a control device (e.g. control sever) according to another aspect of the disclosure, the control unit returns, in response to a request specifying the store identification information, the recording device identification information of the one or more recording devices (e.g. printers) in the store, and the sale counter attribute identifying an attribute of the sale counter where the one or more recording devices are located in the store.

Thus comprised, the control device can provide valuable information related to a store.

In a control device (e.g. control server) according to another aspect of the disclosure, the control unit returns, as sales-related information based on the transaction information related to the store identification information, information including at least one of total sales, sales by product, or the number of receipts printed in the store identified by the store identification information during a specific period of time.

Thus comprised, the control device can provide valuable information related to the store.

In a control device according to another aspect of the disclosure, the control unit returns, as sales-related information based on the transaction information related to the recording device identification information, information including at least one of total sales recorded on the receipts, sales by products recorded on the receipts, or the total number of receipts printed by the recording device of the recording device identification information in a specific period of time.

Thus comprised, the control device can provide valuable information related to the recording device.

In a control device according to another aspect of the disclosure, the control unit returns, as sales-related information based on the transaction information related to the store identification information and the sale counter attribute, information including at least one of total sales, sales by product, or the total number of receipts printed at the sale counter identified by a combination of store identification information and sale counter attribute in a specific period of time.

Thus comprised, the control device can provide valuable information related to the store and/or the sales counter.

In a control device according to another aspect of the disclosure, the control unit returns the sales-related information as text data written in a structured format in response to a request using a Web API.

Thus comprised, the control device can provide sales-related information as data with great utility.

Another aspect of the disclosure relates to a control method of a control device (e. g. a control server), the control method including: relationally storing transaction information (e.g. print data, such as print data including receipt information) received from a recording device configured to produce receipts (e.g. a printer, such as a printer of a store), and recording device identification information identifying the recording device; relationally storing store identification information identifying a store, the recording device identification information of one or more recording devices in the store, and a sale counter attribute identifying an attribute of a sale counter where a recording device is located in the store; and returning, in response to a request from an external device, sales-related information based on transaction information related to the store identification information, transaction information related to the recording device identification information, or transaction information related to a combination of the store identification information and the sale counter attribute.

Other objects and attainments together with a fuller understanding of the disclosure will become apparent and appreciated by referring to the following description and claims taken in conjunction with the accompanying drawings.

### BRIEF DESCRIPTION OF THE DRAWINGS

FIG. 1 exemplarily illustrates the configuration of a transaction processing system according to a preferred embodiment of the disclosure.
FIG. 2 is a block diagram exemplarily illustrating the functional configuration of devices in the transaction processing system.
FIG. 3 is a flow chart exemplarily illustrating the operation of tablet terminals, recording devices, and a control server in the transaction processing system.
FIG. 4 shows an example of a receipt.
FIG. 5 shows an example of the data structure of a transaction information management database.
FIG. 6 is a flow chart exemplarily illustrating the operation of a terminal and the control server.
FIG. 7 shows an example of a verification screen.
FIG. 8 shows an example of a service request screen.
FIG. 9 is a flow chart of an example of the operation of the management device and control server.
FIG. 10 shows an example of a store database.
FIG. 11 shows an example of a store information display screen.
FIG. 12 is a flow chart of an example of the operation of the management device and control server.
FIG. 13 shows an example of a sales information display screen.

### DESCRIPTION OF EMBODIMENTS

A preferred embodiment of the present disclosure is described below with reference to the accompanying figures.

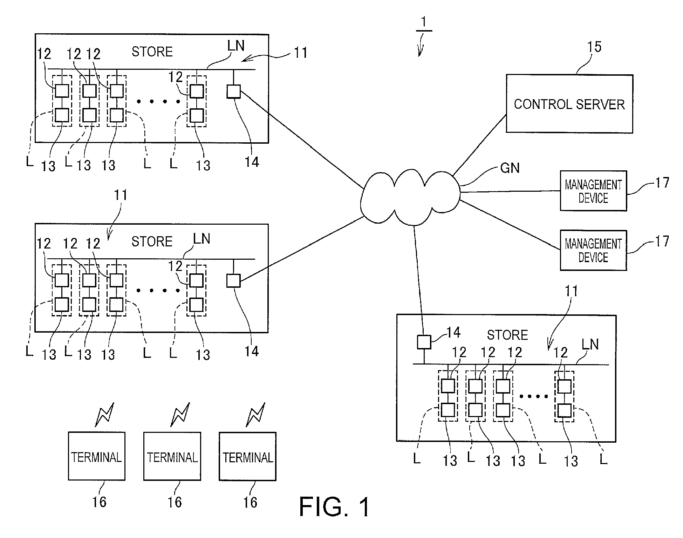

FIG. 1 shows the configuration of an example of a transaction processing system 1 according to a preferred embodiment of the disclosure.

As shown in FIG. 1, the transaction processing system 1 may include one or more, e.g. a plurality of store systems 11. A store system 11 is a system that is used in retail businesses such as supermarkets, convenience stores, department stores, and restaurants, for example. The store system 11 has functions for processing transactions according to the products purchased by customers, and producing sales (transaction) receipts based on the transactions.

One or more checkout counters L where customer transactions are processed may be located in the business where the store system 11 is deployed. A recording device 12 capable of recording on a recording medium (e.g. a printer) may be installed at each checkout counter L. A tablet terminal 13 that connects and communicates wirelessly with the recording device 12 may also be disposed to each checkout counter L and control the recording device 12.

During a transaction at the checkout counter L, the cash register operator may read barcodes from the products or product packaging using a barcode reader BR connected to the recording device 12, and input information related to the transaction to the tablet terminal 13. The recording device 12 may send data based on reading with the barcode reader BR to the tablet terminal 13. Based on the data acquired by reading with the barcode reader BR and received from the recording device 12, and transaction-related input from the operator, the tablet terminal 13 may control the recording device 12 to produce a receipt. The receipt produced by the recording device 12 may then be given by the operator to the customer.

The configuration, functions, and processes based on the functions of the recording device 12 and tablet terminal 13 are described further below.

A local area network LN may be deployed in the store system 11.

The recording device 12 may connect to the local area network LN using a communication protocol used on the LAN.

A communication device 14 may also be connected to the local area network LN. The communication device 14 is an interface device that connects to the local area network LN and a global network GN such as the Internet, for example. The communication device 14 may have the functions of a modem (or ONU (Optical Network Unit)), a router, a DHCP (Dynamic Host Configuration Protocol) server, and/or a NAT (Network Address Translation) unit. The communication device 14 may pass data between devices when a device connected to the local area network LN and a device connected to the global network GN communicate with each other. Note that the communication device 14 is represented by a single function block in FIG. 1, but the communication device 14 may comprise plural devices with different functions.

The recording device 12 can also access the global network GN through the communication device 14.

A control server 15 (exemplarily embodying a control device) is connected to the one or more store systems 11. The control server 15 may be connected to the global network GN. The control server 15 may be a cloud server in a cloud system in which the recording device 12 and a management device 17 described below are clients. More specifically, when triggered by a request from a client, for example, the control server 15 may run a specific computing process. The control server 15 may also send data based on the result of the computing process to a client (e.g. the client that has issued the request) as needed. The control server 15 is represented by a single function block in FIG. 1, but this does not mean that the control server 15 is embodied by a single server device. For example, the control server 15 may include a plurality of server devices. More specifically, the control server 15 may be configured in any way enabling executing the processes described below.

A terminal 16 may also be connected to the global network GN. The terminal 16 in this example is the tablet-type cell phone (e.g. a smartphone) of a customer that comes to the store and completes a transaction. The terminal 16 may, however, be any terminal device that can execute the processes described below. For example, a tablet computer or any other suitable mobile device may also be used as a terminal 16.

A management device 17 may also be connected to the control server 15. The management device 17 may be connected to the global network GN.

The management device 17 in this embodiment may be a terminal located, for example, in the headquarters of the company that manages the store at which the store system 11 is deployed. A person with authority, such as the manager of the store, can use the management device 17 to receive specific services from the control server 15. Services provided by the control server 15 are described below.

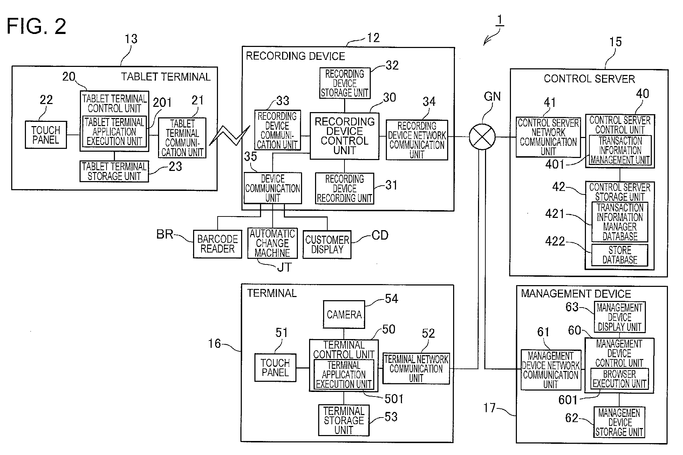

FIG. 2 is a block diagram illustrating examples of the functional configuration of devices in the transaction processing system 1.

The tablet terminal 13 may be a tablet computer with a touch panel 22 covering a large area on the front. When a transaction is processed at the checkout counter L, the tablet terminal 13 may function as a host computer that runs transaction-related processes and controls the recording device 12.

As shown in FIG. 2, the tablet terminal 13 may include a tablet terminal control unit 20, a tablet terminal communication unit 21, a touch panel 22, and a tablet terminal storage unit 23.

The tablet terminal control unit 20 may include a CPU, ROM, RAM, and peripheral circuits, and control the tablet terminal 13. A specific application ("tablet terminal application TAP" below) may be preinstalled on the tablet terminal 13. The tablet terminal control unit 20 may function as a tablet terminal application execution unit 201 by reading and running the tablet terminal application TAP and associated programs.

The tablet terminal communication unit 21 may communicate with the recording device 12 according to a specific communication protocol as controlled by the tablet terminal control unit 20, e.g. by wireless communication. The wireless communication standard for wireless communication between the tablet terminal 13 and recording device 12 may be a wireless LAN standard compatible with an ad hoc mode, a wireless LAN standard compatible with an infrastructure mode, or a near-field communication standard such as Bluetooth (R), for example.

The touch panel 22 may combine an LCD panel or other type of display panel with a touch sensor overlaid to the display panel. The display panel displays information as controlled by the tablet terminal control unit 20. The touch sensor detects touch operations and outputs data e.g. related to the detected touch operations to the tablet terminal control unit 20. The tablet terminal control unit 20 then executes processes appropriate to the touch operation based on input from the touch sensor.

The tablet terminal storage unit 23 may store data.

The recording device 12 may be a thermal line printer that holds roll paper and forms dots on the stored roll paper with a line thermal head to record images, for example.

As shown in FIG. 2, the recording device 12 may have a recording device control unit 30, a recording device recording unit 31 (recording unit), a recording device storage unit 32, a recording device communication unit 33, a recording device network communication unit 34, and a device communication unit 35.

The recording device control unit 30 may include a CPU, ROM, RAM, and other peripheral circuits, and control the recording device 12.

The recording device recording unit 31 may include mechanisms related to recording on roll paper, such as a conveyance mechanism for conveying roll paper stored inside the cabinet of the recording device 12, a recording mechanism for forming dots and recording images on the roll paper with a thermal head, and a cutter mechanism for cutting the roll paper at a specific position. The recording device recording unit 31 may record receipt-related images on the roll paper by the recording mechanism while conveying the roll paper with the conveyance mechanism, and then cut the roll paper at a specific position with the cutter mechanism, thereby producing a receipt.

The recording device storage unit 32 may store data.

The recording device communication unit 33 may communicate with the tablet terminal 13 according to a specific communication protocol as controlled by the recording device control unit 30.

The recording device network communication unit 34 may communicate with devices connected to the global network GN (including the control server 15) according to a specific communication protocol as controlled by the recording device control unit 30.

The device communication unit 35 may include an interface board with one or more ports such as a USB port, a serial communication port other than a USB port, or other type of port. The ports may be adapted such that a device can connect to each port. The device communication unit 35 may communicate with the devices connected to the recording device 12 through the ports as controlled by the recording device control unit 30.

Note that the device communication unit 35 may also be configured with a wireless communication capability for communicating wirelessly with devices.

A barcode reader BR, customer display CD, and an automatic change machine JT are examples of devices connected to the recording device 12 in this example.

The barcode reader BR may be used to read barcodes from products and product packaging, and may output data representing the read barcodes to the device communication unit 35. The device communication unit 35 then may output the data input from the barcode reader BR to the recording device control unit 30.

The customer display CD may display transaction-related information as controlled by the recording device control unit 30. The information presented on the customer display CD can be checked by the customer involved in the transaction at the checkout counter L.

The automatic change machine JT may have openings for receiving cash and openings for dispensing change. When cash is input through the cash receiver, the change due may be dispensed from the cash return openings as controlled by the recording device control unit 30.

The control server 15 may be a cloud server to which the recording device 12 and management device 17 may connect as clients.

As shown in FIG. 2, the control server 15 may include a control server control unit 40 (exemplarily embodying a control unit), a control server network communication unit 41, and a control server storage unit 42 (exemplarily embodying a storage unit).

The control server control unit 40 may include a CPU, ROM, RAM, and other peripheral circuits, and control the control server 15.

One function block of the control server control unit 40 may be a transaction information management unit 401. The transaction information management unit 401 is described further below.

The control server network communication unit 41 may communicate with devices connected to the global network GN (including recording devices 12 and management devices 17, for example) e.g. according to a specific communication protocol as controlled by the control server control unit 40.

The control server storage unit 42 may store data.

The terminal 16 may be a tablet-type cell phone (e.g. smartphone) used by a customer of the business during the transaction.

As shown in FIG. 2, the terminal 16 may have a terminal control unit 50, a touch panel 51, a terminal network communication unit 52, a terminal storage unit 53, and a camera 54.

The terminal control unit 50 may include a CPU, ROM, RAM, and other peripheral circuits, and may control the terminal 16. A specific application (referred to below as the terminal application AP) may have been previously installed to the terminal 16. The terminal control unit 50 may function as a terminal application execution unit 501 that reads and executes the terminal application AP and other associated programs.

The touch panel 51 may include a display panel on the front of the terminal 16, and a touch sensor disposed over the display panel.

The terminal network communication unit 52 may communicate through the global network GN with other devices (including the control server 15, for example) connected to the network, e.g. according to a specific communication protocol, as controlled by the terminal control unit 50.

The terminal storage unit 53 may store data.

The camera 54 may include an imaging element such as a CCD image sensor or a CMOS image sensor, a photographic lens group, and a lens drive unit that drives the photographic lens group to adjust the zoom or focus, for example, and may be used to take pictures. The camera 54 may generate picture image data from the captured image, and output date e.g. related to the generated picture image data to the terminal control unit 50.

The management device 17 may be a device that is managed by the entity that manages the store in which the store system 11 is deployed.

As shown in FIG. 2, the management device 17 may include a management device control unit 60, a management device network communication unit 61, a management device storage unit 62, and a management device display unit 63.

The management device control unit 60 may include a CPU, ROM, RAM, and other peripheral circuits, and may control the management device 17. A browser may be installed on the management device 17. The management device control unit 60 may function as a browser execution unit 601 by reading and running the browser and associated programs.

The management device network communication unit 61 may communicate with devices connected to the global network GN (including the control server 15, for example), e.g. according to a specific communication protocol, as controlled by the management device control unit 60.

The management device storage unit 62 may store data.

The management device display unit 63 may include an LCD panel or other display panel, and may display information as controlled by the management device control unit 60.

Operation of the tablet terminal 13, recording device 12, and control server 15 when a customer transaction is processed at the checkout counter L is described next.

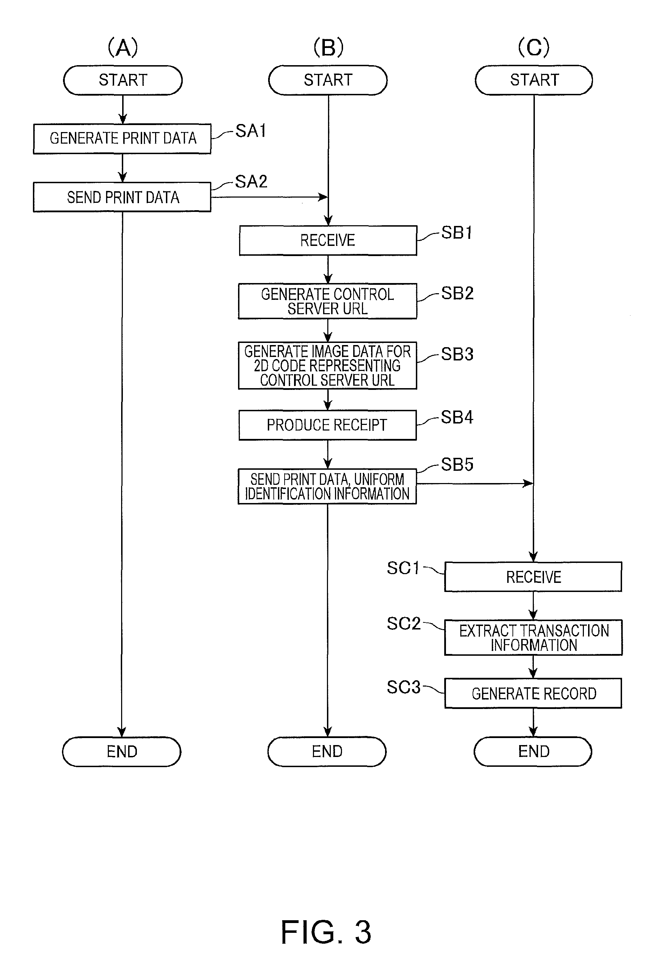

FIG. 3 is a flow chart of an example of the operation of the tablet terminal 13, recording device 12, and control server 15 when processing a transaction at the checkout counter L, column (A) showing the operation of the tablet terminal 13, column (B) showing the operation of the recording device 12, and column (C) showing the operation of the control server 15.

As shown in column (A) of FIG. 3, the tablet terminal application execution unit 201 of the tablet terminal control unit 20 of the tablet terminal 13 executes a transaction process (e.g. a payment process) according to a customer transaction, and generates print data based on the transaction process (step SA1). The print data may be control data for producing a receipt.

More specifically, in step SA1, the tablet terminal application execution unit 201 of the tablet terminal control unit 20 generates receipt information based on input from the recording device 12 and input on the touch panel, e.g. from a checkout clerk, according to the customer transaction. The receipt information may be information for the recording device 12 to record on the produced receipt. The receipt information is described more specifically below.

Next, the tablet terminal application execution unit 201 generates print data based on the generated receipt information. The print data may include the receipt information. The print data may be control data instructing producing a receipt with the receipt information recorded in a specific format, and may include plural control commands in the command language of the recording device 12.

After generating the print data in step SA1, the tablet terminal application execution unit 201 controls the tablet terminal communication unit 21 to send the generated print data to the recording device 12 (step SA2).

As shown in column (B) of FIG. 3, the recording device control unit 30 of the recording device 12 controls the recording device communication unit 33 to receive the print data (step SB1).

Next, the recording device control unit 30 acquires a specific URL (Uniform Resource Locator) of the control server 15, and generates a control server URL adding uniform identification information as a URL query parameter to the acquired URL (step SB2).

The URL of the control server 15 acquired by the recording device control unit 30 in step SB2 may have been previously registered by a specific method and recorded in a configuration file not shown. In step SB2, the recording device control unit 30 references the configuration file to get the URL of the control server 15.

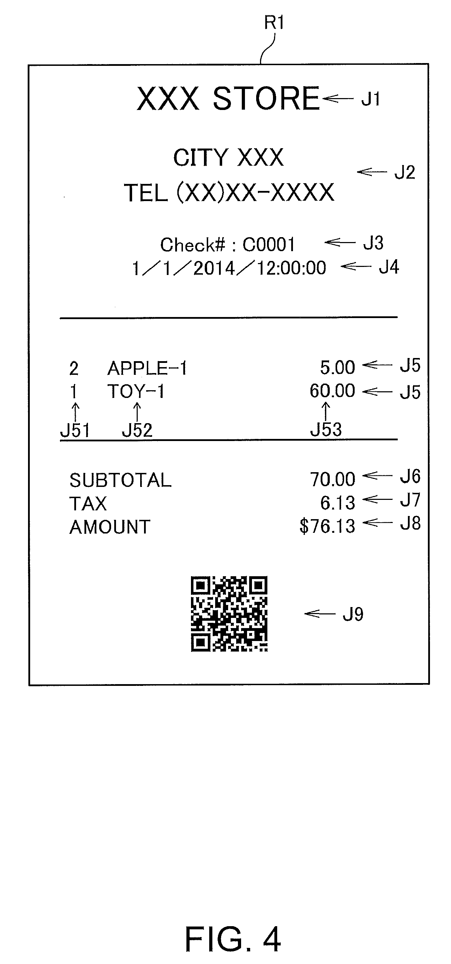

The uniform identification information contains information (e.g. the serial number) uniquely identifying a specific recording device 12 (exemplarily embodying recording device identification information), and receipt identification information J3 (see the sample receipt R1 in FIG. 4) uniquely identifying a particular receipt produced by that recording device 12. The information uniquely identifying the recording device 12, e.g. information identifying the serial number of the recording device 12, may be stored at a specific location in the recording device storage unit 32. Because the receipt identification information J3 is included in the receipt information as described below, the recording device control unit 30 can extract receipt information from the print data by analyzing the print data. The tablet terminal 13 may also be configured to send the receipt identification information J3 with the print data to the recording device 12.

The uniform identification information enables identifying what receipts are produced by which recording devices 12 in plural store systems 11.

In step SB2, the recording device control unit 30 adds a parameter name identifying uniform identification information and the uniform identification information as the parameter value as a URL query parameter to the URL of the control server 15.

Next, the recording device control unit 30 generates image data for a 2D code representing the control server URL (step SB3) . A program with a function for generating image data for a 2D code symbol representing specific information based on the specific information may have been previously installed on the recording device control unit 30. In step SB3, the recording device control unit 30 runs this program to generate the image data for the 2D code symbol representing the control server URL.

Next, based on the print data received in step SB1, more specifically, based on the print data received in step SB1 and the image data for the 2D code symbol representing the control server URL generated in step SB3, the recording device control unit 30 controls the recording device recording unit 31 to produce a receipt (step SB4). The resulting receipt may then be given to the customer.

FIG. 4 shows receipt R1 as an example of a receipt produced by a recording device 12 based on the print data.

Logo information J1, which may be a graphic representation of the name of the store is recorded on the receipt R1 in FIG. 4.

Store information J2 such as the address and telephone number of the store, for example, is also recorded on the receipt R1.

Receipt identification information J3 identifying the receipt is also recorded on the receipt R1.

Also recorded on the receipt R1 is receipt date information J4 indicating when the receipt was produced.

One or more lines of line item information J5 containing information related to the products purchased by the customer is also recorded on the receipt R1. The line item information J5 may include for each product purchased by the customer: purchase quantity information J51 including information indicating the quantity (number) of the product on that line, product name information J52 including information indicating the name of the product, and/or unit price information J53 including information indicating the unit price of the product.

Subtotal information J6 indicating the subtotal is also recorded on the receipt R1.

Tax-related information J7 indicating the applicable taxes is also recorded on the receipt R1.

Transaction total information J8 identifying the total amount of the transaction is also recorded on the receipt R1.

The recording device control unit 30 records the information to be recorded on the receipt, e.g. the information from the logo information J1 to the transaction total information J8, based on the print data.

Code information J9, which is the image data for the 2D code symbol representing the control server URL, is also recorded on the receipt R1.

The recording device control unit 30 records the code information J9 based on the image data generated in step SB3.

Next, the recording device control unit 30 controls the recording device network communication unit 34 to send the print data received in step SB1 and the uniform identification information to the control server 15 (step SB5). Information related to the data destination (such as the address and protocol, for example) and the format of the transmitted data may have been previously registered in the recording device 12.

As shown in column (C) of FIG. 3, the control server control unit 40 of the control server 15 controls the control server network communication unit 41 to receive the print data and uniform identification information transmitted by the recording device 12 (step SC1).

Next, the control server control unit 40 extracts the transaction information from the received print data (step SC2). Thus, the print data may be said to include the transaction information.

The transaction information is a predefined subset of the receipt information recorded on the receipt. In the example of the sample receipt R1 shown in FIG. 4, the transaction information includes the store information J2, receipt identification information J3, receipt date information J4, line item information J5 (quantity information J51, product name information J52, unit price information J53), subtotal information J6, tax information J7, and transaction total information J8.

Returning to FIG. 3, next, the control server control unit 40 accesses a transaction information manager database 421 stored on the control server storage unit 42, and creates a record in the database based on the transaction information extracted in step SC2 (step SC3).

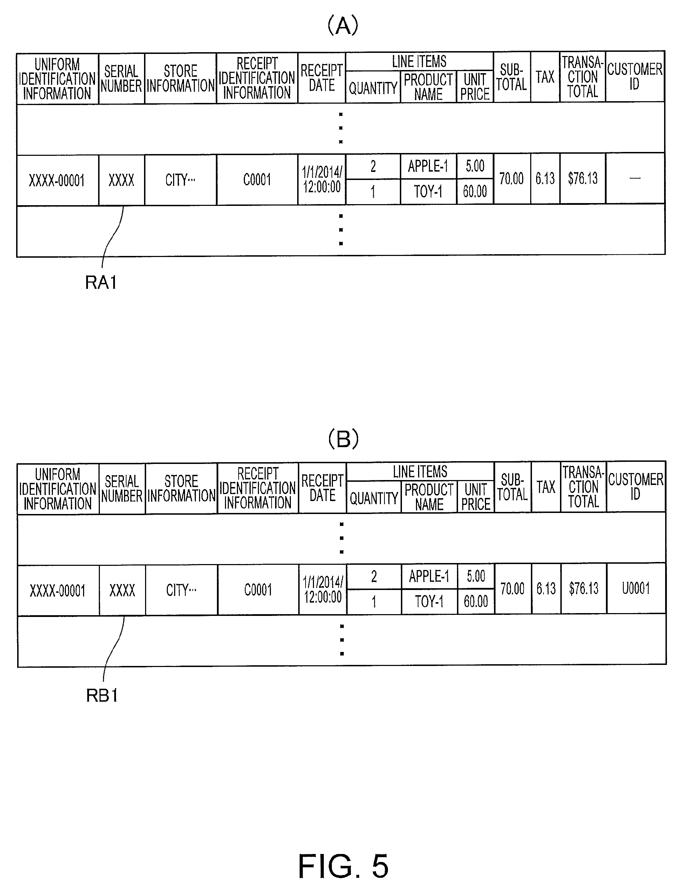

Column (A) of FIG. 5 illustrates the data structure of the transaction information manager database 421.

As shown in column (A) of FIG. 5, each record in the transaction information manager database 421 has a field for storing the uniform identification information.

As further shown in column (A) of FIG. 5, each record in the transaction information manager database 421 also has a field for storing the information uniquely identifying the recording device 12, e.g. the serial number of the recording device 12.

As further shown in column (A) of FIG. 5, each record in the transaction information manager database 421 also has fields for storing the transaction information. More specifically, each record in the transaction information manager database 421 may have fields for storing the store information J2, receipt identification information J3, receipt date information J4, line item information J5 (quantity information J51, product name information J52, unit price information J53), subtotal information J6, tax information J7, and transaction total information J8.

As further shown in column (A) of FIG. 5, each record in the transaction information manager database 421 also has a field for storing a customer ID. The customer ID is described further below.

Returning to FIG. 3, in step SC3, the control server control unit 40 creates one record in the transaction information manager database 421 and fills the appropriate field in that record with the uniform identification information received in step SC1.

The control server control unit 40 also stores the information uniquely identifying the recording device 12, e.g. the serial number, in the appropriate field in that record. The control server control unit 40 acquires the information uniquely identifying the recording device 12, e.g. the serial number, based on the uniform identification information, which as described above includes the serial number and the receipt identification information. The control server control unit 40 also stores the transaction information extracted in step SC2 in the appropriate field in that record. The control server control unit 40 may store a null value in the customer ID field in that record.

Record RA1 in column (A) in FIG. 5 is an example of the record created in step SC3.

As described above, a record storing the transaction information related to a specific transaction is created in the transaction information manager database 421 according to a transaction completed at any of the stores in which the store system 11 is deployed. The control server 15 can also provide specific services based on the transaction information manager database 421. An example of a service provided by the control server 15 is described further below.

The processes executed by the terminal 16 and the control server 15 when a customer that has completed a transaction uses the customer's own terminal 16 to read the code information J9 from the receipt given to the customer is described next.

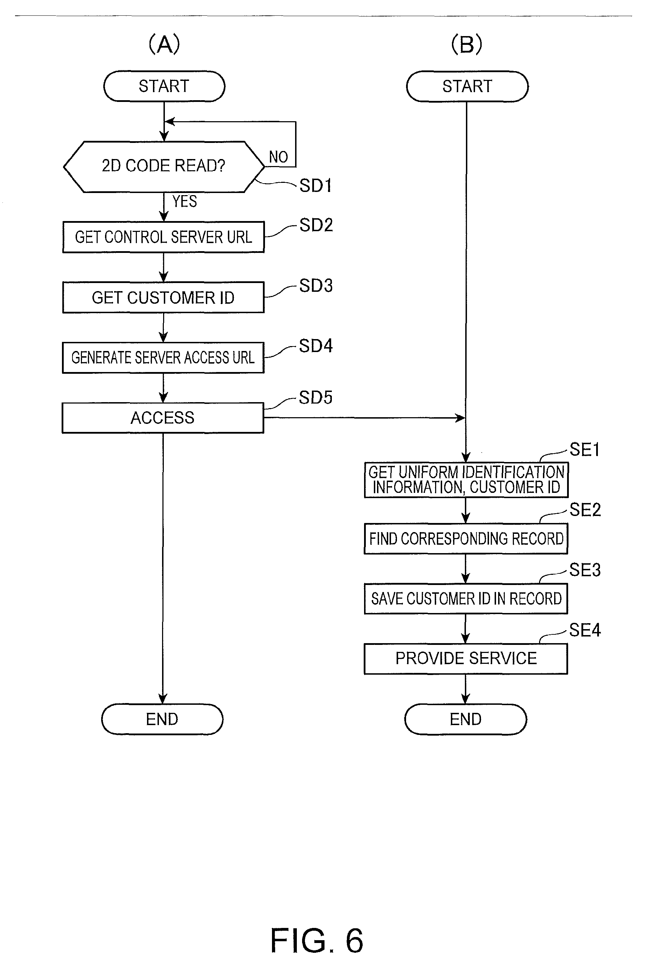

FIG. 6 is a flow chart of an example of the operation of the terminal 16 and the control server 15 when a code information J9 is read, column (A) showing the operation of the terminal 16, and column (B) showing the operation of the control server 15.

The customer that received the receipt starts the terminal application AP on the terminal 16 and takes a picture of the code information J9 printed on the receipt with the camera 54.

As shown in column (A) of FIG. 6, the terminal application execution unit 501 of the terminal control unit 50 of the terminal 16 analyzes the picture image data input from the camera 54 at a specific period and determines if image data for the 2D code symbol is contained in the picture image data (step SD1).

If image data for the 2D code symbol is contained in the picture image data (step SD1: YES), the terminal application execution unit 501 executes the following process (step SD2). Note that below the image data for the 2D code symbol contained in the picture image data is image data based on the code information J9 that was printed on the receipt.

In step SD2, the terminal application execution unit 501 analyzes the image data for the 2D code symbol contained in the picture image data, and acquires the control server URL represented by the 2D code. As described above, this control server URL is the URL of the control server 15 to which uniform identification information was added as a URL query parameter.

Next, the terminal application execution unit 501 gets the customer ID (step SD3). The customer ID may be identification information previously assigned to each customer that can receive an award point service from the control server 15, and may have been previously stored in a specific storage area in a format that can be accessed by the terminal application execution unit 501.

Next, the terminal application execution unit 501 adds the customer ID acquired in step SD3 as a URL query parameter to the control server URL acquired in step SD2 (step SD4). More specifically, the terminal application execution unit 501 adds the customer ID as the parameter value of a parameter name identifying the customer ID to the control server URL.

The control server URL to which the customer ID was added as a URL query parameter is referred to below as a "server access URL."

Next, the terminal application execution unit 501 accesses the server access URL (step SD5). This may involve sending the uniform identification information and the customer ID to the control server 15.

As shown in column (B) of FIG. 6, the control server control unit 40 of the control server 15 acquires the uniform identification information and customer ID that are added as URL query parameters when the customer terminal 16 accesses the server access URL (step SE1).

Next, the control server control unit 40 accesses the transaction information manager database 421 stored in the control server storage unit 42, and finds the record in the database identified by the uniform identification information acquired in step SE1 (step SE2).

Next, the control server control unit 40 stores the customer ID acquired in step SE1 to the customer ID field in the database record found in step SE2 (step SE3). As a result, the corresponding fields in the record found in step SE2 are filled with the uniform identification information, transaction information, and customer ID. The record RB1 in column (B) of FIG. 5 is an example of the record resulting from step SE3.

Next, the control server control unit 40 provides a specific service to the customer owning the terminal 16 (step SE4).

An example of the service provided to the customer by the control server control unit 40 in step SE4 is an award points service.

An award points service in this example is a service that awards points based on the total amount paid by the customer in the transaction (e.g. based on the amount in the transaction total information J8) to the customer.

The control server 15 may provide this award points service using a method such as described below.

In this example, the control server storage unit 42 of the control server 15 stores a database that relationally stores the customer ID to the balance of points previously awarded to the customer. The number of points awarded to the customer is previously set according to the total amount of the transaction.

In step SE4, the control server control unit 40 acquires the transaction total information J8 from the record processed in step SE3. Next, the control server control unit 40 determines the number of points to award to the customer based on the amount indicated by the transaction total information J8 (exemplarily embodying the total amount paid by the customer in the transaction). Next, the control server control unit 40 accesses a database relationally storing the customer ID and the balance of points owned by the customer, and uses the customer ID as a search key to find the matching record. Next, the control server control unit 40 increases the balance of points in the located record by the number of points to award.

As a result of this award points service, the customer's balance of points is increased according to the total amount that the customer has paid in the transaction.

Another example of a service provided to the customer by the control server control unit 40 in step SE4 is an electronic receipt service.

An electronic receipt service is a service that displays an electronic receipt providing at least some of the information that is contained in the transaction information.

The control server 15 may provide this electronic receipt service using a method such as described below.

First, the control server control unit 40 acquires the transaction information from the record processed in step SE3. Next, based on the acquired transaction information, the control server control unit 40 generates drawing data in a specific format for displaying the transaction information in a specific layout on the touch panel 51 of the terminal 16. Next, the control server control unit 40 controls the control server network communication unit 41 to send the generated drawing data to the terminal 16. The terminal 16 then displays an electronic receipt based on the received drawing data.

Two examples of services that the control server 15 may provide to the customer possessing the terminal 16 when accessed from the terminal 16 based on reading the code information J9 have been described above, but the services that the control server 15 may provide are not limited thereto. The control server 15 may provide many different services based on transaction information because transaction information based on individual transactions is stored in the transaction information manager database 421.

A transaction information retrieval service, which is an example of a service that the control server 15 may provide to someone with particular rights, such as for example the store manager, when the control server 15 is accessed from a management device 17 is described next.

To receive the transaction information retrieval service, the service receiver may start a browser on the management device 17, and enter a command to access a specific URL on the control server 15 that must be accessed to receive the transaction information retrieval service. This URL may have been previously given to the service receiver by a specific method.

The browser execution unit 601 of the management device control unit 60 of the management device 17 may then send a corresponding HTTP request to the control server 15 based on this command from the service receiver.

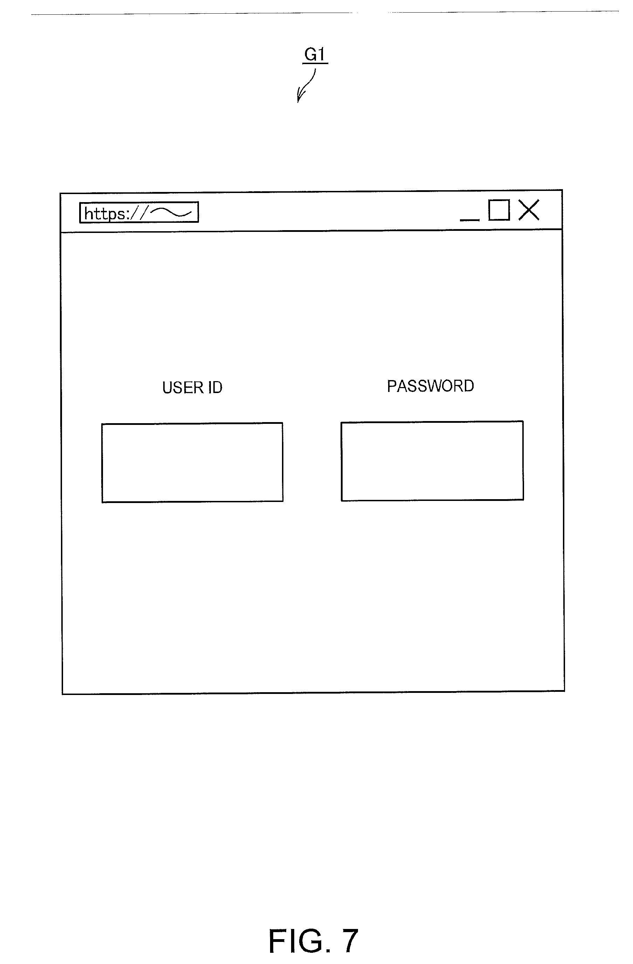

In response to a request from the management device 17, the control server control unit 40 of the control server 15 may send an HTML file for displaying an authentication screen G1 (FIG. 7) to the management device 17.

The browser execution unit 601 of the management device 17 may then display an authentication screen G1 based on the received HTML file on the management device display unit 63.

FIG. 7 shows an example of the authentication screen G1.

The authentication screen G1 is a screen for inputting a user ID identifying the service receiver, and a password for authentication. As shown in the example of FIG. 7, the authentication screen G1 has a field for inputting the user ID, and a field for inputting the password.

The service receiver then may input and confirm the user ID and password on the authentication screen G1. The user ID and password may have previously been made known to the service receiver by a specific method.

Based on inputting and confirming the user ID and password on the authentication screen G1, the browser execution unit 601 may send the user ID and password to the control server 15, e.g. by a function of a script embedded in the HTML file. The user ID and password may be sent securely using known technology.

The control server control unit 40 of the control server 15 may receive the user ID and password, and may perform an authentication process based on the user ID and password.

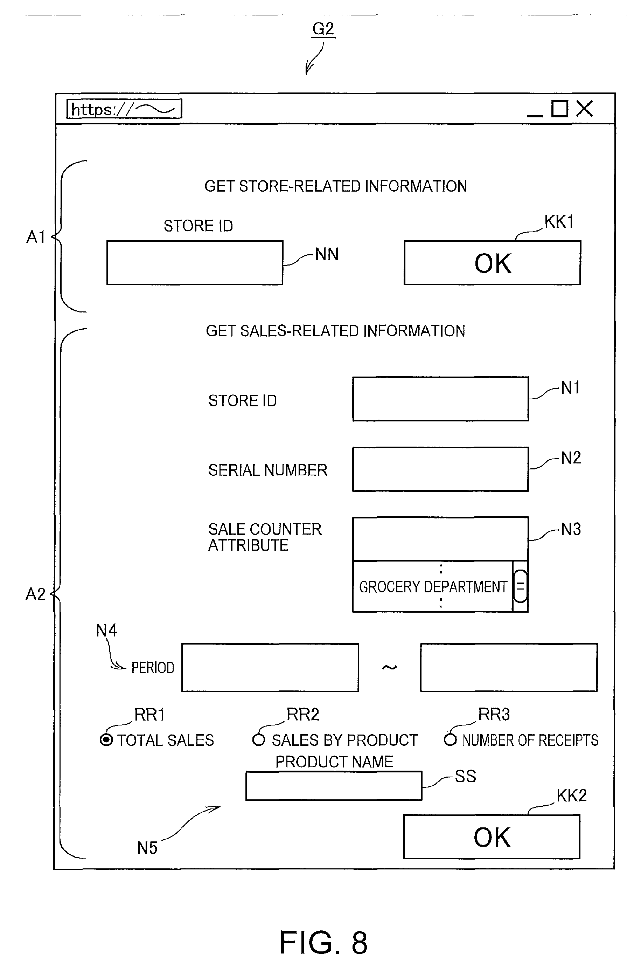

If authentication is successful, the control server control unit 40 may send an HTML file for displaying a service request screen G2 (FIG. 8) to the management device 17.

The browser execution unit 601 of the management device 17 then may display the service request screen G2 based on the received HTML file on the management device display unit 63.

FIG. 8 shows an example of a service request screen G2.

As shown in the example of FIG. 8, the service request screen G2 has an area A1 and an area A2.

Area A1 may be used when the service receiver wants to retrieve information related to the store (below, "store-related information") as described further below. As shown in the example of FIG. 8, area A1 has a store ID input field NN for inputting the store ID (store identification information) described further below.

Area A2 may be used when the service receiver wants to retrieve information related to sales ("sales-related information" below) as described further below. As shown in the example of FIG. 8, area A2 includes a store ID input field N1 for inputting the store ID; a serial number input field N2 for inputting a serial number; a sales counter attribute input field N3 for inputting sales counter attribute information (described further below) ; a query period input field N4 for inputting a query period (described below); and a requested information input area N5 for inputting what information to retrieve.

The requested information input area N5 has radio buttons RR1 to RR3, any one of which can be selected. As described more fully below, radio button RR1 may be selected to retrieve gross sales information as the sales-related information.

Radio button RR2 may be selected to retrieve sales information byproduct as the sales-related information. A product name input field SS related to radio button RR3 may also be provided, and a product name can be input to the product name input field SS when radio button RR3 is selected.

Radio button RR3 may be selected to retrieve the number of receipts produced as the sales-related information.

The processes executed by the management device 17 and control server 15 when the service receiver retrieves store-related information using area A1 in the service request screen G2, and when retrieving sales-related information using area A2 are described next.

### When acquiring store-related information

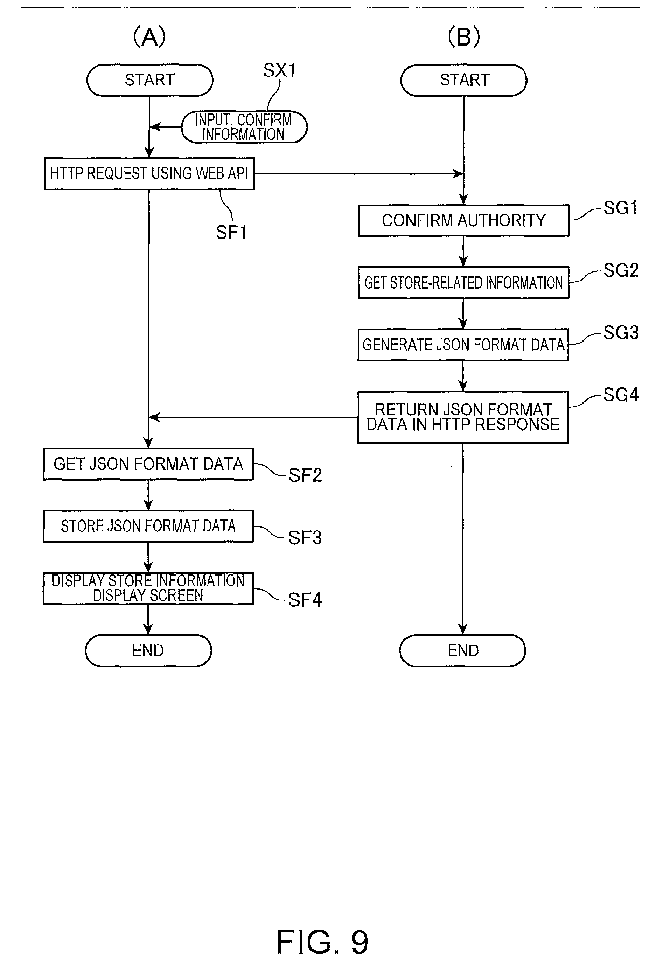

FIG. 9 is a flow chart of an example of the operation of the management device 17 and control server 15 when a service receiver acquires store-related information, column (A) showing the operation of the management device 17, and column (B) showing the operation of the control server 15. The content of the store-related information is described below.

To acquire store-related information, the service receiver inputs the store ID of the store for which store-related information is desired, e.g. to the store ID input field NN in area A1 of the service request screen G2, and taps the OK button KK1 to confirm entry (step SX1). The store ID is identification information identifying a store where the store system 11 is deployed.

Below, the store ID the service receiver inputs to the store ID input field NN is referred to as the "input store ID."

As shown in column (A) FIG. 9, the browser execution unit 601 of the management device 17 executes the following process when input of the store ID to the store ID input field NN is confirmed.

Specifically, the browser execution unit 601 sends a corresponding request, e.g. HTTP request, to the control server 15, e.g. by a function of a script embedded in an HTML file (step SF1).

In step SF1, the browser execution unit 601 may write the request line of the HTTP request using the GET method and the corresponding Web API as the pathname.

A Web API is a programming interface for calling a transaction information management program installed on the control server 15, causing the program to execute a specific process in conjunction with accessing the transaction information manager database 421, and returning the process result. The transaction information management program, as described further below, accesses the transaction information manager database 421, retrieves the information corresponding to the HTTP request, generates JSON format data describing the retrieved information in JSON format, and returns data including the generated JSON format data in an HTTP response.

The Web API is provided by the entity that develops and provides the transaction information management program. The service receiver canmanually generate the HTTP request using the Web API, and can acquire JSON format data containing the desired information.

The transaction information management unit 401 of the control server control unit 40 of the control server 15 is the function block that may execute this process by reading and running the above transaction information management program.

As shown in column (B) of FIG. 9, when the HTTP request of step SF1 is received, the transaction information management unit 401 of the control server control unit 40 of the control server 15 accesses a store database 422 stored by the control server storage unit 42, and determines whether the service receiver has authority to acquire store-related information for the store identified by the input store ID (step SG1). The process of step SG1 is described below.

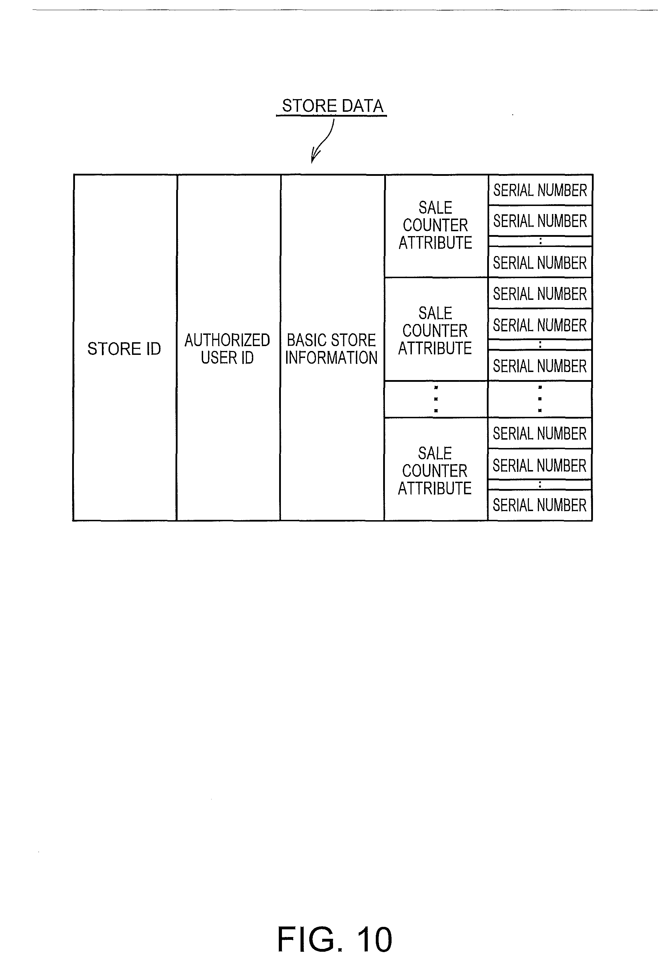

FIG. 10 shows an example of the data structure of the store database 422.

The store database 422 stores data for each store. FIG. 10 exemplarily illustrates the data stored for each store in the store database 422 in a format useful for description. The store data stored in the store database 422 may actually comprise one or more records.

As shown in the example of FIG. 10, the store data stored for each store in the store database 422 includes a store ID.

Each store data record also includes authorized user ID information related to the store ID. The authorized user ID information is information identifying the user ID of one or more service receivers permitted to receive store-related information and sales-related information for the store corresponding to the store data.

The store data may also include basic store information related to the store ID. The basic store information is basic information about the particular store, and in this embodiment of the disclosure includes the store's address, telephone number, and/or information indicating the scale of the store. The basic store information can obviously include different information.

The store data also includes one or more sale counter attributes related to the store ID. A sale counter attribute is information about one or more sales counters in the store, and is defined for each sale counter. A sale counter attribute in this embodiment may conceptually represent the type (or category) of sale counter, such as a sales counter for groceries, women's clothing, men's clothing, or toys, for example.

The store data also includes the information uniquely identifying the one or more recording devices 12 related to a single sale counter attribute (e.g. the serial numbers of said recording devise 12). The one or more serial numbers (exemplarily embodying information uniquely identifying recording devices) related to one sale counter attribute may be the serial numbers of the one or more recording devices 12 installed at the sales counters related to that one sale counter attribute.

In step SG1, the transaction information management unit 401 references the store database 422 and finds the store data record in the database with a store ID matching the input store ID. Next, the transaction information management unit 401 compares the authorized user ID in the selected record with the user ID of the service receiver, and determines whether the service receiver has authority to receive store-related information for the corresponding store.

If it is determined at step SG1 that the service receiver does not have such authority, the transaction information management unit 401 executes an appropriate process. For example, the transaction information management unit 401 may generate and send to the management device 17 a HTML file for displaying information reporting that information cannot be provided because the service receiver does not have authority to acquire information about the store identified by the input store ID.

If it is determined at step SG1 that the service receiver has authority to receive the information, the transaction information management unit 401 proceeds to step SG2.

In step SG2, the transaction information management unit 401 retrieves the store data record with the input store ID from the store data records in the store database 422. Next, the transaction information management unit 401 may retrieve the store ID, basic store information, sale counter attribute, and serial numbers in the retrieved store data record.

The information acquired by the transaction information management unit 401 in step SG2 is referred to below as store-related information; that is, the transaction information management unit 401 may retrieve store-related information from the retrieved store data record.

Next, based on the store-related information acquired in step SG2, the transaction information management unit 401 generates data containing the store-related information, e.g. JSON format data containing the store-related information structured according to the level of information (step SG3).

Next, the transaction information management unit 401 returns the JSON format data generated in step SG3 as HTTP response (step SG4).

As shown in column (A) of FIG. 9, the browser execution unit 601 of the management device control unit 60 of the management device 17 then acquires the JSON format data based on the HTTP response (step SF2).

Next, the browser execution unit 601 stores the JSON format data acquired in step SF2 in a specific storage area (step SF3).

Note that because the JSON format data is text data, the service receiver can acquire the store-related information by reading the stored JSON format data.

Next, the browser execution unit 601 presents a store information display screen G3 e.g. based on the JSON format data (step SF4).

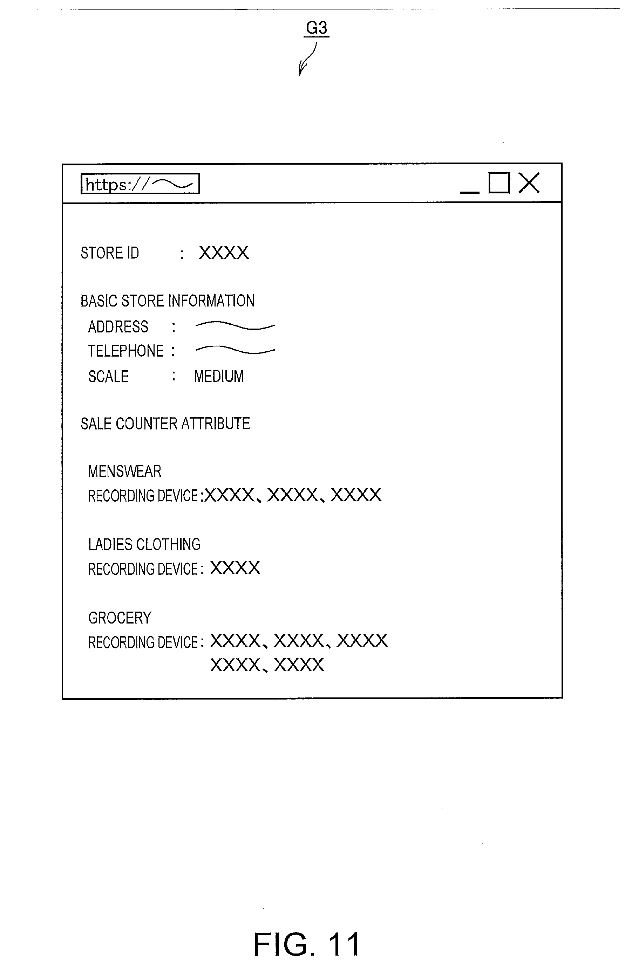

FIG. 11 shows an example of a store information display screen G3.

As shown in the example of FIG. 11, the store information display screen G3 presents the store-related information in a specific layout.

The service receiver can easily acquire store-related information for a desired store by reading the store information display screen G3.

In this example, the browser execution unit 601 displays the store information display screen G3 in a different browser window than the browser window containing the service request screen G2. As a result, the service receiver can input information to area A2 in the service request screen G2 while referring to the store-related information presented in the store information display screen G3. Note that if the browser has tabs for displaying different web pages, the store information display screen G3 and the service request screen G2 may be presented in different tabs.

### When acquiring sales-related information

Operation of the management device 17 and control server 15 when the service receiver acquires sales-related information is described next.

The service receiver can request and acquire first to third sales-related information as the sales-related information by inputting to area A2 as described below.

### First sales-related information

The first sales-related information may be the gross sales, sales of a specific product, or the number of printed receipts during a specific period in one store.

To acquire first sales-related information, the service receiver inputs the store ID of the one store (i.e. the store for which the first sales-related information is to be acquired) in the store ID input field N1. The service receiver also inputs the specific period (i.e. the period of time for which the first sales-related information is to be acquired) in the query period input field N4. The service receiver may also select radio button RR1 in the requested information input area N5 to request gross sales information. The service receiver may alternatively select radio button RR2 in the requested information input area N5 and input the product name in the product name input field SS to request sales information about a specific product. The service receiver may alternatively select radio button RR3 in the requested information input area N5 to request the total number of receipts printed.

### Second sales-related information

The second sales-related information may be the gross sales, sales of a specific product, or the number of printed receipts during a specific period for one recording device 12.

Note that the gross sales for one recording device 12 means the total of all transactions processed at the checkout counter L at which the one recording device 12 is installed, that is, for example, the grand total of the total transaction amount expressed by the transaction total information J8 that is recorded on receipts by the one recording device 12. Sales of a specific product for one recording device 12 means the grand total of the sales of a specific product that were purchased in transactions at the checkout counter L at which the one recording device 12 is installed.

To acquire the second sales-related information, the service receiver inputs the serial number (exemplarily embodying the information uniquely identifying recording devices 12) of the one recording device 12 (i.e. the recording device 12 for which the second sales-related information is to be acquired) in the serial number input field N2.

The serial numbers of the recording devices 12 installed at the sales counters of a specific sale counter attribute in a specific store can be acquired by referring to the store information display screen G3 using the method described above. More specifically, by reading the store information display screen G3, the service receiver can input the serial number of the desired recording device 12 in the serial number input field N2 by knowing the store where the recording device 12 is installed and the sale counter attribute of the checkout counter L where the recording device 12 is installed.

The service receiver also inputs the specific period (i.e. the period of time for which the second sales-related information is to be acquired) in the query period input field N4. The service receiver may also select radio button RR1 in the requested information input area N5 to request gross sales information. The service receiver may alternatively select radio button RR2 in the requested information input area N5 and input the product name in the product name input field SS to request sales information about a specific product. The service receiver may alternatively select radio button RR3 in the requested information input area N5 to request the total number of receipts printed.

### Third sales-related information

The third sales-related information may be the gross sales, sales of a specif ic product, or the number of printed receipts during a specific period at the sales counters of a specific sale counter attribute (sales counter type, or sales counter category) in one store.

To acquire the third sales-related information, the service receiver inputs the store ID of the one store (i.e. the store for which the third sales-related information is to be acquired) in the store ID input field N1. The service receiver also inputs a specific sale counter attribute (i.e. the sale counter attribute for which the third sales-related information is to be acquired) in the sales counter attribute input field N3.

The sales counter attribute input field N3 in this example is a pull-down menu, and a specific sale counter attribute can be input by selecting one item from among the sale counter attributes presented in the menu. The service receiver also inputs the specific period i.e. the period of time for which the third sales-related information is to be acquired) in the query period input field N4. The service receiver also may select radio button RR1 in the requested information input area N5 to request gross sales information. The service receiver may alternatively select radio button RR2 in the requested information input area N5 and input the product name in the product name input field SS to request sales information about a specific product. The service receiver may alternatively select radio button RR3 in the requested information input area N5 to request the total number of receipts printed.

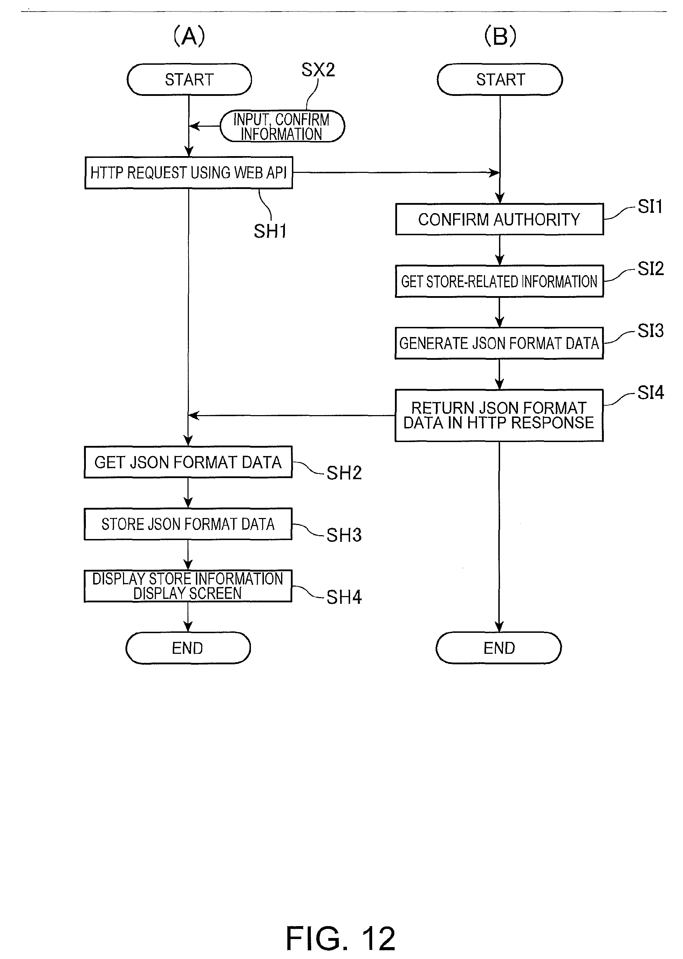

FIG. 12 is a flow chart of an example of the operation of the management device 17 and control server 15 when a service receiver acquires sales-related information, column (A) showing the operation of the management device 17, and column (B) showing the operation of the control server 15.

To acquire sales-related information, the service receiver inputs the necessary information by the method described above e.g. in area A2 of the service request screen G2, in accordance with which of the first to third sales-related information is desired, and then taps the OK button KK2 to confirm input (step SX2).

As shown in column (A) of FIG. 12, when data input to area A2 is confirmed, the browser execution unit 601 of the management device 17 executes the following process.

Specifically the browser execution unit 601 sends a corresponding request, e.g. HTTP request, to the control server 15 (step SH1).

The browser execution unit 601 writes the request line of the HTTP request using the GET method and the corresponding Web API as the pathname.

The transaction information management unit 401 of the control server control unit 40 of the control server 15 is the function block that may execute this process by reading and running the above transaction information management program.

As shown in column (B) of FIG. 12, when the HTTP request of step SH1 is received, the transaction information management unit 401 of the control server control unit 40 of the control server 15 accesses the store database 422 stored by the control server storage unit 42, and determines whether the service receiver has authority to acquire store-related information for the store identified by the input store ID (step SI1).

If the service receiver does not have such authority, the transaction information management unit 401 executes an appropriate process. If the service receiver has authority to receive the information, the transaction information management unit 401 proceeds to step SI2.

In step SI2, the transaction information management unit 401 references the transaction information manager database 421 and the store database 422, and acquires the sales-related information (any one of the first to third sales-related information) requested by the service receiver.

For example, if the service receiver has requested first sales-related information related to gross sales during a specific period of time in one store, the transaction information management unit 401 acquires the first sales-related information by executing the following process.

Specifically, the transaction information management unit 401 references the store database 422 to retrieve the store data record for the one store using the store ID as the search key.

Next, the transaction information management unit 401 acquires the serial numbers (exemplarily embodying information uniquely identifying recording devices 12) of the recording devices 12 in that one store based on the acquired store data.

Next, the transaction information management unit 401 searches the records of the transaction information manager database 421 to find the records for which the date stored in the receipt date information J4 is within the specific period and the serial number stored in the record matches the acquired serial numbers.

Next, the transaction information management unit 401 retrieves the transaction total information J8 from each record and computes the sum of all transaction total information J8 values. This calculated amount is the first sales-related information requested by the user.

This example describes the process executed by the transaction information management unit 401 when acquiring first sales-related information related to gross sales during a specific period for one store. However, because the transaction information manager database 421 and store database 422 store all information required to acquire the first to third sales-related information, the transaction information management unit 401 can similarly acquire the first to third sales-related information from the databases.

Next, based on the sales-related information acquired in step SI2, the transaction information management unit 401 generates data containing the sales-related information, e.g. JSON format data containing the sales-related information structured according to the JSON format (step SI3).

Next, the transaction information management unit 401 returns the JSON format data generated in step SI3 as HTTP response (step SI4).

As shown in column (A) of FIG. 12, the browser execution unit 601 of the management device control unit 60 of the management device 17 then acquires the JSON format data based on the HTTP response (step SH2).

Next, the browser execution unit 601 stores the JSON format data acquired in step SH2 in a specific storage area (step SH3).

Note that because the JSON file is text data, the service receiver can acquire the sales-related information by reading the stored JSON format data.

Next, the browser execution unit 601 presents a sales information display screen G4 e.g. based on the JSON format data (step SH4).

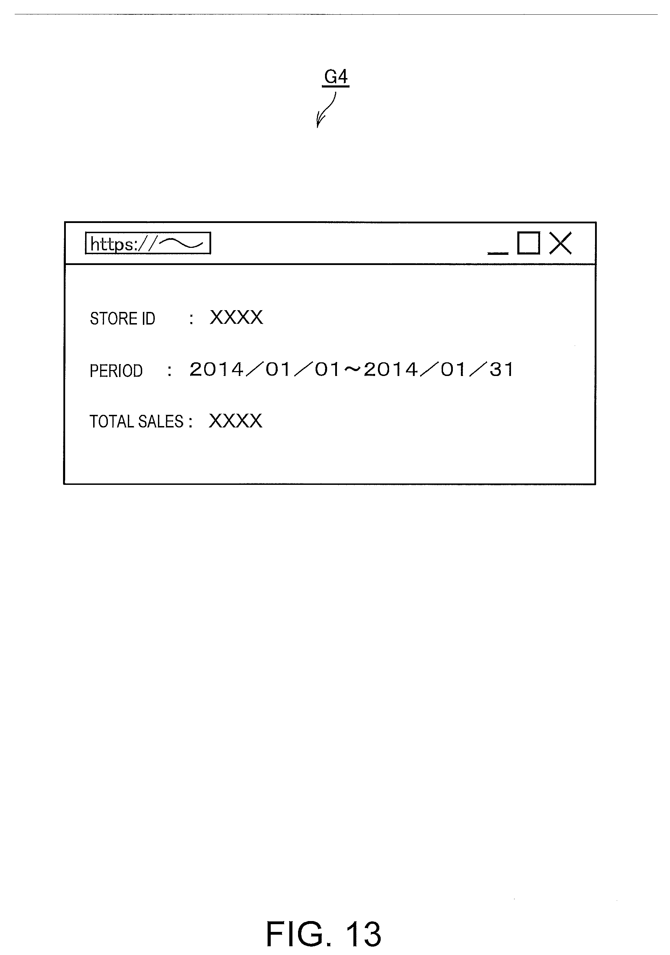

FIG. 13 shows an example of the sales information display screen G4.

As shown in the example of FIG. 13, the sales information display screen G4 presents the sales-related information in a specific layout.

The service receiver can easily acquire sales-related information for a desired store by reading the sales information display screen G4.

As described above, the control server storage unit 42 (exemplarily embodying a storage unit) of the control server 15 (exemplarily embodying a control device) according to the disclosure relationally stores transaction information based on print data received from a recording device 12 that can print receipts (e.g. a printer, such as a receipt printer, for example), and a serial number (exemplarily embodying recording device identification information) identifying the recording device 12, in the transaction information manager database 421. In a store database 422, the control server storage unit 42 stores a store ID (exemplarily embodying store identification information) identifying a particular store, the serial numbers of one or more recording devices 12 used in the store, and a sale counter attribute identifying an attribute of a checkout counter in the store at which the recording device 12 is located.

In response to a request from a management device 17 as an example of an external device, the control server control unit 40 (exemplarily embodying a control unit) returns sales-related information based on transaction information corresponding to a store ID, sales-related information based on transaction information corresponding to a serial number, or sales-related information based on transaction information corresponding to a combination of store ID and sale counter attribute.

Thus comprised, the control server 15 can provide useful information based on the transaction information being information based on receipts produced by the recording device 12 in a particularly simple and efficient manner, as indicated above.

In response to a request specifying a store ID, the control server control unit 40 also returns the serial numbers of one or more recording devices 12 in a store, and a sale counter attribute identifying an attribute of a checkout counter at which the recording device 12 is used in the store.

Thus comprised, the control server 15 can provide useful information related to a store based on there being one or more sales counters in a store, and one or more recording devices 12 for printing receipts at each sales counter.

The control server control unit 40 in this embodiment of the disclosure returns sales by the store of the store ID, sales by product, or the number of receipts produced during a specific period as sales-related information based on transaction information related to the store ID.

Thus comprised, the control server 15 can provide useful information based on transaction information in response to a query.

The control server control unit 40 in this embodiment can also return the grand total of all sales receipts, the total sales by products printed on the receipts, or the total number of receipts printed by the recording device 12 of the serial number within a specific period of time as the sales-related information based on transaction information related to a serial number.

Thus comprised, the control server 15 can provide useful information based on transaction information in response to a query.

The control server control unit 40 in this embodiment can also return the grand total of all sales, the total sales by product, or the total number of receipts printed at a sales counter identified by a store ID and sale counter attribute within a specific period of time as the sales-related information based on transaction information for a specific combination of store ID and sale counter attribute.

Thus comprised, the control server 15 can provide useful information based on transaction information in response to a query.

The control server control unit 40 in this embodiment can also return sales-related information in response to a request using a Web API as text data containing structured information.

Thus comprised, the control server 15 can return sales-related information as highly useful text data written in a structured format.

The disclosure is described above with reference to a preferred embodiment thereof, but the disclosure is not limited thereto and can be modified and adapted in many ways without departing from the scope of the accompanying claims.

For example, the recording device 12 sends print data based on a transaction to the control server 15, and the control server 15 extracts transaction information from the print data. However, the recording device 12 may extract the transaction information from the print data and send the transaction information to the control server 15.

Specific examples of the information stored in the transaction information manager database 421 and store database 422 are described above, but the information stored in the databases is not so limited.

Specific examples of the store-related information and sales-related information are also described above, but the content of this information is not so limited.

The function blocks described above with reference to the figures can also be embodied as desired by hardware and software, and do not suggest a specific hardware configuration.

The disclosure being thus described, it will be obvious that it may be varied in many ways. Such variations are not to be regarded as a departure from the spirit and scope of the invention, and all such modifications as would be obvious to one skilled in the art are intended to be included within the scope of the following claims.

## Claims

1. A control server (15) comprising:
a storage unit (42) configured to
relationally store print data received from a printer (12) of a store, and printer identification information identifying the printer (12), and
to relationally store store identification information identifying the store, the printer identification information of one or more printers (12) in the store, and sale counter attributes, each sale counter attribute identifying an attribute of a sale counter at which a given one of the one or more printers (12) is located in the store; and
a control unit (40) configured to return, in response to a request from an external device (17), sales-related information based on the print data related to the store identification information, based on the print data related to the printer identification information, or based on the print data related to a combination of the store identification information and the sale counter attribute.

2. The control server (15) described in claim 1, wherein:
the control unit (40) is configured to return, in response to a request specifying the store identification information, the printer identification information of the one or more printers (12) in the store and for each of the one or more printers (12) in the store, the sale counter attribute identifying the attribute of the sale counter at which the respective printer (12) is located in the store.

3. The control server (15) described in claim 1 or 2, wherein:
the control unit (40) is configured to return, as sales-related information based on the print data related to the store identification information, total sales, sales by product, or the number of receipts printed in the store identified by the store identification information during a specific period of time.

4. The control server (15) described in any one of claims 1 to 3, wherein:
the control unit (40) is configured to return, as sales-related information based on the print data related to the printer identification information, total sales recorded on the receipts, sales by products recorded on the receipts, or the total number of receipts printed by the printer (12) of the printer identification information in a specific period of time.

5. The control server (15) described in any one of claims 1 to 4, wherein:
the control unit (40) is configured to return, as sales-related information based on the print data related to the store identification information and the sale counter attribute, total sales, sales by product, or the total number of receipts printed at the sale counter identified by a combination of the store identification information and the sale counter attribute in a specific period of time.

6. The control server (15) described in any one of claims 1 to 5, wherein:
the control unit (40) is configured to return the sales-related information as text data written in a structured format in response to a request using a Web API.

7. A control method of a control server (15), the method comprising:
relationally storing print data received from a printer (12) of a store, and printer identification information identifying the printer (12);
relationally storing store identification information identifying the store, the printer identification information of one or more printers (12) in the store, and sale counter attributes, each sale counter attribute identifying an attribute of a sale counter at which a given one of the one or more printers (12) is located in the store; and
returning, in response to a request from an external device (17), sales-related information based on the print data related to the store identification information, based on the print data related to the printer identification information, or based on the print data related to a combination of the store identification information and the sale counter attribute.

8. The control method described in claim 7, further comprising:
returning, in response to a request specifying the store identification information, the printer identification information of the one or more printers (12) in the store and for each of the one or more printers (12) in the store, the sale counter attribute identifying the attribute of the sale counter at which the respective printer (12) is located in the store.

9. The control method described in claim 7 or 8, further comprising:
returning, as sales-related information based on the print data related to the store identification information, total sales, sales by product, or the number of receipts printed in the store identified by the store identification information during a specific period of time.

10. The control method described in any one of claims 7 to 9, further comprising:
returning, as sales-related information based on the print data related to the printer identification information, total sales recorded on the receipts, sales by products recorded on the receipts, or the total number of receipts printed by the printer (12) of the printer identification information in a specific period of time.

11. The control method described in any one of claims 7 to 10, further comprising:
returning, as sales-related information based on the print data related to the store identification information and the sale counter attribute, total sales, sales byproduct, or the total number of receipts printed at the sale counter identified by a combination of the store identification information and the sale counter attribute in a specific period of time.

12. The control method described in any one of claims 7 to 11, further comprising:
returning the sales-related information as text data written in a structured format in response to a request using a Web API.

13. A control system comprising:
a printer (12) of a store configured to print a receipt and transmit print data related to the receipt;
a control server (15) including a storage unit (42) storing the print data received from the printer (12), and a control unit (40) configured to return sales-related information based on the print data in response to a request from an external device (17); and
the external device (17), which is configured to request the sales-related information from the control server (15);
wherein the storage unit (42) of the control server (15) is configured to
relationally store the print data received from the printer (12) and printer identification information identifying the printer (12), and
to relationally store store identification information identifying the store, the printer identification information of one or more printers (12) in the store, and sale counter attributes, each sale counter attribute identifying an attribute of a sale counter at which a given one of the one or more printers (12) is located in the store;
the control unit (40) of the control server (15) is configured to return, in response to a request from the external device (17), sales-related information based on the print data related to the store identification information, based on the print data related to the printer identification information, or based on the print data related to a combination of the store identification information and the sale counter attribute; and
the external device (17) is configured to request the control server (15) to send the sales-related information based on the print data related to the store identification information, the sales-related information based on the print data related to the printer identification information, or the sales-related information based on the print data related to a combination of the store identification information and the sale counter attribute.
